# EUROPEAN PATENT SPECIFICATION

(11) **EP 3 179 131 B1**
(45) Date of publication and mention of the grant of the patent: **16.10.2019**
(21) Application number: 16203321.1
(22) Date of filing: 09.12.2016
(51) Int. Cl.: F16F 15/18

(54) **DAMPER FOR DAMPING TORSIONAL VIBRATIONS OF A CRANKSHAFT**
DÄMPFER ZUR DÄMPFUNG VON DREHSCHWINGUNGEN EINER KURBELWELLE
AMORTISSEUR DESTINÉ À AMORTIR LES VIBRATIONS DE TORSION D'UN VILEBREQUIN

(30) Priority: 11.12.2015 IT UB20156847
(43) Date of publication of application: 14.06.2017
(73) Proprietor: FPT Motorenforschung AG, 9320 Arbon (CH)
(72) Inventor: LINSENMEYER, Rainer, 9320 ARBON (CH)
(74) Representative: Fiume, Orazio

(56) References cited:
- EP-A2- 2 910 813

## Description

### Field of the invention

The present invention relates to a damper for damping torsional vibrations of a crankshaft, in particular in the field of high displacement combustion engines.

### Description of the prior art

The torsional vibrations are often damped through high weight flywheels and/or the use of resilient dampers such as silicon dampers.

In the silicon dampers, there is a ring, working as a flywheel, arranged in a housing and the rotation is transmitted to the flywheel through viscoelastic behavior of a silicon into which the flywheel is sourronded. Such silicon dampers damp torsional vibrations of the crankshaft by dissipating energy into heat.

A different solution is offered by EP2910813, wherein a vibration damping system is disclosed, suitable to recover said vibration energy in electrical form. The features of EP2910813 are in the preamble of claim 1.

### Summary of the invention

The main object of the present invention to provide an damping device capable to damp the torsional vibrations of a crankshaft according to a non-dissipative strategy.

The main principle of the invention is not to connect rigidly a flywheel to the crankshaft, but by means of an electromagnetic coupling capable to produce energy only from the vibrational slipping between the crankshaft and the flywheel.

When the engine is in operation, the torsional vibrations are transmitted to the flywheel through an electromagnetic coupling that generates electric energy due to the Faraday-Lenz law.

Such energy is advantageously rectified and stored into a battery, being suitable to be used for further uses.

According to an exemplary embodiment not forming part of the invention, the housing of the damper is rigidly connected with the crankshaft. Permanent magnets are associated to such housing. The flywheel and the housing are coaxially arranged on an end of the crankshaft, usually the front end, with the housing fixedly arranged, while the flywheel is rotatably mounted on the same end, coupled though a bearing. The flywheel is provided with coils arranged in such a way to couple the magnetic flux produced by the permanent magnets.

During accelerating half-wave and decelerating half-wave, the permanent magnets try to accelerate or decelerate with respect to the coils, thus current circulation is induced into the coils that, through suitable brushes is conveyed to a rectifier and stored into a storing means, such as a battery.

According to an embodiment according to the invention, the flywheel is provided of a first order of coils arranged in such a way to couple the magnetic flux produced by the permanent magnets affixed on the housing. The flywheel comprises also a second order of coils arranged in order not to coupled with the permanent magnet of the housing, but suitable to couple with a third order of coils affixed on a fixed stator.

Any speed variation of the crankshaft, induces a current circulation into the first order of coils of the flywheel rotating with the crankshaft. Such first order of coils energize the second order of coils producing a magnetic flux coupling with the third order of fixed coils. Thus, energy can be conveyed to a current rectifier without the use of brushes.

Thus, it is clear that while the exemplary embodiment is not provided with a stator, the embodiment according to the invention has a stator.

A first object of the present invention is a damper for damping torsional vibrations of a crankshaft according to claim 1.

Another object of the present invention is a combustion engine including said damper.

A further object of the present invention is a terrestrial vehicle or a fixed installation comprising such combustion engine.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows an exemplary embodiment not forming part of the present invention,
- Fig. 2 shows an embodiment according to the present invention.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

### Detailed description of the preferred embodiments

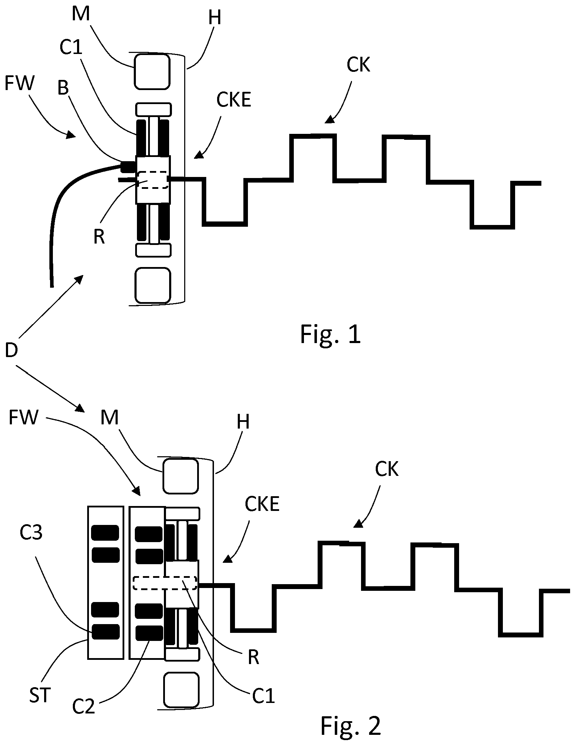

Fig 1 discloses an exemplary embodiment not forming part of the invention.

A crankshaft CK, for any number of cylinders, comprises a first end CKE, preferably a front end.

On such end the damper D, subject of the present invention, is associated.

The damper D comprises a housing H fixedly associated with such end. Permanent magnets M are associated to such housing. A flywheel FW is rotatably associated with said end CKE, preferably though a bearing.

Both the flywheel and the housing H are coaxially arranged on said end of the crankshaft. The flywheel is provided with coils arranged in such a way to couple the magnetic flux produced by the permanent magnets. Preferably, the magnetic flux produced by the permanent magnets develops radially with respect to the crankshaft.

The flywheel comprises coils C1 arranged in such a way to couple with the magnetic flux produced by the permanent magnets. Thus, if the permanent magnets are arranged to produce a radial flux, the coils have their symmetry axis radial.

However, also a frontal coupling can be conceived. The concept of frontal id discussed here below.

The coils C1 are connected to a collector (not shown) suitable to be contacted by brushes B, arranged to convey electric current produced by the coils as a consequence of any misalignment between coils and flux produced by the permanent magnets. Due to the fact that the Faraday-Lenz law is fulfilled both for crankshaft acceleration and deceleration, in both situations electric current is produced and suitably rectified and stored.

Figure 2 discloses an embodiment according to the invention, permitting to avoid the implementation of brushes.

The idea is to introduce fist magnetic coupling between the housing H and the flywheel and a second magnetic coupling between said flywheel and a fixed stator ST.

This embodiment differs from the exemplary embodiment, for the presence of a second coil arrangement C2, also called, second order fixed on the flywheel.

This second arrangement of coils is electrically connected with the first arrangement of coils: preferably each coil of the second arrangement of coils is series connected with a corresponding coil of the first arrangement of coils.

Therefore, a plurality of pairs of coils is obtained.

Alternatively, the coils of the first arrangement of coils are series connected between each other and the coils of the second arrangement of coils are series connected between each other and the first and second arrangement are connected in series between each other.

A third arrangement of coils C3 is associated with a fixed stator ST. The second arrangement of coils produces a magnetic flux suitable to energize the third order of coils, in order to produce electric current to be rectified and stored. The magnetic coupling between the flywheel and the stator according to this embodiment is frontal, being the coupling magnetic flux axial with respect to the end CKE of the crankshaft.

The third arrangement of coils is insulated by the flux produced by the permanent magnets, in the sense that there is no magnetic flux concatenation, because the scope of the active damper is not to produce energy from the rotation of the crankshaft but only from its speed variations caused by the non-linear motion of the crank.

Preferably, the coils of the third arrangement are oriented perpendicularly with respect to the flux orientation produced by the permanent magnets.

The first and second arrangements of coils can be realized through separate coils electrically interconnected, or through single coils suitably curved in order to have one portion magnetically coupled with the permanent magnets M and the remaining portion coupled with the third arrangement of coils C3 of the stator.

It is also conceivable that while the permanent magnets develop an axial flux, the third coils are arranged to develop radially, thus, the coupling between the housing and the flywheel is frontal, while the coupling between the stator and the flywheel is radial.

According to the figures, the flywheel FL is associated with the end CKE of the crankshaft CK through a bearing R.

According to a preferred embodiment of the invention, the current impulses (positive and/or negative) can be exploited in order to recognize one or more positions of the engine crankshaft. This information can be suitably derived in order to estimate the crankshaft speed.

Furthermore, a lack or variation of impulsive current can be interpreted as a misfiring condition. Therefore, according to present invention the electric damper is also implemented as crankshaft speed sensor and/or misfiring sensor instead of any further sensor or redundant with respect to further sensors.

In case the damper is designed as an asynchronous machine, a slip is always present between flywheel and housing, therefore, according with the knowledge of the poles numbers, it is possible to estimate such slip and subtract it to the estimated crankshaft speed.

Anyway, during transients, the rectifier receives current impulses with higher amplitude with respect to a steady state conditions, therefore, it is possible to distinguish impulses due to crankshaft vibrations and impulses caused by engine speed acceleration/deceleration, namely commanded by the driver. Therefore, according to a preferred embodiment of the invention, such damper is electrically connected with a rectifier capable to rectify the electric energy produced, but also to estimate the crankshaft speed and/or misfiring conditions. Alternatively, such estimation is carried out by additional separate elaborating means also connected to the output electric cable of the damper.

Many changes, modifications, variations and other uses and applications of the subject invention will become apparent to those skilled in the art after considering the specification and the accompanying drawings which disclose preferred embodiments thereof.

## Claims

1. Damper for damping torsional vibrations of a crankshaft the damper comprising a housing (H), suitable to be fixedly connected with an end (CKE) of a crankshaft, a flywheel (FW) suitable to be rotatably connected with said end (CKE) wherein the housing is provided with permanent magnets (M) and the flywheel is provided with a first arrangement of coils (C1) arranged in such a way to couple a magnetic flux produced by the permanent magnets, said magnetic flux dragging in rotation said flywheel, so that the coils produce electric current only as a consequence of a speed variation between the housing and the flywheel, wherein said flywheel further comprises a second arrangement of coils (C2) series connected with said first arrangement of coils, **characterized in that** the damper further comprises a stator (ST) provided with a third arrangement of coils (C3) arranged in such a way to couple a magnetic flux produced by said second arrangement of coils, wherein said second arrangement of coils is electrically supplied by said first arrangement of coils, the third arrangement of coils being conceived to convey electric current induced by a magnetic flux produced by said second arrangement of coils.

2. Damper according to claim 1, wherein the third arrangement of coils is insulated by the flux produced by the permanent magnets of the housing.

3. Damper according to claim 1 or 2, wherein the magnetic flux produced by said permanent magnet (M) is perpendicular with respect to the development of said third arrangement of coils (C3).

4. Damper according to any one of the claims 1 - 3, wherein said permanent magnets are arranged in order to produce a radial magnetic flux with respect to said crankshaft end and said third arrangement of coils is arranged so that the development the respective coils is parallel with respect to said crankshaft end.

5. Damper according to any one of the claims 1 - 3, wherein said permanent magnets are arranged in order to produce a magnetic flux parallel with respect to said crankshaft end and said third arrangement of coils is arranged so that the development the respective coils is radial with respect to said crankshaft end.

6. Damper according anyone of the previous claims 1 - 5, wherein said first and second arrangement of coils are made from separate coils electrically interconnected, or through single coils suitably curved in order to have one portion magnetically coupled with the permanent magnets (M) only and the remaining portion coupled with the third arrangement of coils (C3) only.

7. Damper according to any of the previous claims, further comprising rectifying means in order to rectifying the electric current induced into said first arrangement of coils and storage means to store such electric energy.

8. Damper according to any of the previous claims, further comprising elaborating means capable to analyze the electric current produced by said damper in order to determine an engine speed and/or misfiring conditions.

9. Combustion engine comprising a crankshaft (CK) having an end (CKE) and a damper (D), according to any one of the previous claims from 1 to 8, coupled with said end (CKE) in order to produce electric energy from the dumping of torsional vibrations of crankshaft.

10. Terrestrial vehicle or fixed installation comprising a combustion engine according to claim 9.

## Patentansprüche

1. Dämpfer zum Dämpfen von Torsionsschwingungen einer Kurbelwelle, wobei der Dämpfer ein Gehäuse (H), das mit einem Ende (CKE) einer Kurbelwelle fest verbunden sein kann, und ein Schwungrad (FW), das mit dem Ende (CKE) drehbar verbunden sein kann, umfasst, wobei das Gehäuse mit Permanentmagneten (M) versehen ist und das Schwungrad mit einer ersten Anordnung (C1) von Spulen versehen ist, die so angeordnet sind, dass sie mit einem magnetischen Fluss, der durch die Permanentmagneten erzeugt wird, koppeln, wobei der magnetische Fluss das Schwungrad rotatorisch mitzieht, so dass die Spulen elektrischen Strom nur als Folge einer Drehzahländerung zwischen dem Gehäuse und dem Schwungrad erzeugen, wobei das Schwungrad ferner eine zweite Anordnung (C2) von Spulen enthält, die mit der ersten Anordnung von Spulen in Reihe geschaltet sind, **dadurch gekennzeichnet, dass**
der Dämpfer ferner einen Stator (ST) umfasst, der mit einer dritten Anordnung (C3) von Spulen versehen ist, die so angeordnet sind, dass sie mit einem magnetischen Fluss, der durch die zweite Anordnung von Spulen erzeugt wird, koppeln, wobei die zweite Anordnung von Spulen durch die erste Anordnung von Spulen elektrisch gespeist wird, wobei die dritte Anordnung von Spulen dafür ausgelegt ist, elektrischen Strom, der durch den durch die zweite Anordnung von Spulen erzeugten magnetischen Fluss induziert wird, zu transportieren.

2. Dämpfer nach Anspruch 1, wobei die dritte Anordnung von Spulen durch den durch die Permanentmagneten des Gehäuses erzeugten Fluss isoliert ist.

3. Dämpfer nach Anspruch 1 oder 2, wobei der durch den Permanentmagneten (M) erzeugte magnetische Fluss zu der Erstreckung der dritten Anordnung (C3) von Spulen senkrecht ist.

4. Dämpfer nach einem der Ansprüche 1-3, wobei die Permanentmagneten angeordnet sind, um einen radialen magnetischen Fluss in Bezug auf das Kurbelwellenende zu erzeugen und die dritte Anordnung von Spulen so angeordnet ist, dass die Erstreckung der jeweiligen Spulen zu dem Kurbelwellenende parallel ist.

5. Dämpfer nach einem der Ansprüche 1-3, wobei die Permanentmagneten angeordnet sind, um einen magnetischen Fluss parallel zu dem Kurbelwellenende zu erzeugen, und die dritte Anordnung von Spulen so angeordnet ist, dass die Erstreckung der entsprechenden Spulen in Bezug auf das Kurbelwellenende radial ist.

6. Dämpfer nach einem der vorhergehenden Ansprüche 1-5, wobei die erste und die zweite Anordnung von Spulen aus miteinander elektrisch verbundenen, getrennten Spulen oder aus einzelnen Spulen, die geeignet gekrümmt sind, damit nur ein Teil mit den Permanentmagneten (M) magnetisch gekoppelt ist und der verbleibende Teil nur mit der dritten Anordnung (C3) von Spulen gekoppelt ist, hergestellt sind.

7. Dämpfer nach einem der vorhergehenden Ansprüche, der ferner Gleichrichtermittel, um den elektrischen Strom, der in der ersten Anordnung von Spulen induziert wird, gleichzurichten, und Speichermittel, um diese elektrische Energie zu speichern, umfasst.

8. Dämpfer nach einem der vorhergehenden Ansprüche, der ferner Auswertungsmittel umfasst, um den elektrischen Strom, der durch den Dämpfer erzeugt wird, zu analysieren, um die Kraftmaschinendrehzahl und/oder Fehlzündungsbedingungen zu bestimmen.

9. Brennkraftmaschine, die eine Kurbelwelle (CK) mit einem Ende (CKE) und einen Dämpfer (D) nach einem der vorhergehenden Ansprüche 1 bis 8, der mit dem Ende (CKE) gekoppelt ist, um aus der Dämpfung der Torsionsschwingungen der Kurbelwelle elektrische Energie zu erzeugen, umfasst.

10. Terrestrisches Fahrzeug oder ortsfeste Installation, das bzw. die eine Brennkraftmaschine nach Anspruch 9 enthält.

## Revendications

1. Amortisseur pour amortir des vibrations en torsion d'un vilebrequin, l'amortisseur comprenant un carter (H) apte à être connecté de façon fixe à une extrémité (CKE) d'un vilebrequin, un volant (FW) apte à être connecté en rotation avec ladite extrémité (CKE), dans lequel le carter est muni d'aimants permanents (M) et le volant est muni d'un premier agencement de bobines (C1) agencé de sorte à coupler un flux magnétique produit par les aimants permanents, ledit flux magnétique entraînant en rotation ledit volant, de sorte que les bobines produisent un courant électrique seulement en tant que conséquence d'une variation de vitesse entre le carter et le volant, dans lequel ledit volant comprend en outre un deuxième agencement de bobines (C2) connecté en série avec ledit premier agencement de bobines, **caractérisé en ce que** l'amortisseur comprend en outre un stator (ST) muni d'un troisième agencement de bobines (C3) agencé de sorte à coupler un flux magnétique produit par ledit deuxième agencement de bobines, dans lequel ledit deuxième agencement de bobines est alimenté électriquement par ledit premier agencement de bobines, le troisième agencement de bobines étant conçu de manière à convoyer le courant électrique induit par un flux magnétique produit par ledit deuxième agencement de bobines.

2. Amortisseur selon la revendication 1, dans lequel le troisième agencement de bobines est isolé par le flux produit par les aimants permanents du carter.

3. Amortisseur selon la revendication 1 ou 2, dans lequel le flux magnétique produit par lesdits aimants permanents (M) est perpendiculaire par rapport au développement dudit troisième agencement de bobines (C3) .

4. Amortisseur selon l'une quelconque des revendications 1 à 3, dans lequel lesdits aimants permanents sont agencés afin de produire un flux magnétique radial par rapport à ladite extrémité de vilebrequin et ledit troisième agencement de bobines est agencé de sorte que le développement des bobines respectives est parallèle par rapport à ladite extrémité de vilebrequin.

5. Amortisseur selon l'une quelconque des revendications 1 à 3, dans lequel lesdits aimants permanents sont agencés afin de produire un flux magnétique parallèle par rapport à ladite extrémité de vilebrequin et ledit troisième agencement de bobines est agencé de sorte que le développement des bobines respectives est radial par rapport à ladite extrémité de vilebrequin.

6. Amortisseur selon l'une quelconque des revendications précédentes 1 à 5, dans lequel lesdits premier et deuxième agencements de bobines sont constitués à partir de bobines séparées électriquement interconnectées, ou par l'intermédiaire de bobines uniques incurvées de manière appropriée pour avoir une partie couplée magnétiquement aux aimants permanents (M) seulement et la partie restante couplée au troisième agencement de bobines (C3) seulement.

7. Amortisseur selon l'une quelconque des revendications précédentes, comprenant en outre un moyen de redressement afin de redresser le courant électrique induit à l'intérieur dudit premier agencement de bobines et un moyen de stockage pour stocker cette énergie électrique.

8. Amortisseur selon l'une quelconque des revendications précédentes, comprenant en outre un moyen d'explicitation permettant d'analyser le courant électrique produit par ledit amortisseur afin de déterminer une vitesse et/ou des conditions de défaut d'allumage de moteur.

9. Moteur à combustion comprenant un vilebrequin (CK) comprenant une extrémité (CKE) et un amortisseur (D), selon l'une quelconque des revendications précédentes 1 à 8, couplé à ladite extrémité (CKE) afin de produire de l'énergie électrique à partir de l'amortissement de vibrations en torsion du vilebrequin.

10. Véhicule terrestre ou installation fixe comprenant un moteur à combustion selon la revendication 9.
